(19) Europäisches Patentamt
European Patent Office
Office européen des brevets

(11) **EP 4 661 552 A1**

(12) **EUROPEAN PATENT APPLICATION**
published in accordance with Art. 153(4) EPC

(43) Date of publication:
**10.12.2025 Bulletin 2025/50**

(21) Application number: **23920045.4**

(22) Date of filing: **31.01.2023**

(51) International Patent Classification (IPC):
*H04W 72/23* (2023.01)    *H04W 72/04* (2023.01)
*H04W 72/12* (2023.01)    *H04W 24/10* (2009.01)
*H04W 64/00* (2009.01)    *H04L 1/18* (2023.01)
*H04L 5/00* (2006.01)

(52) Cooperative Patent Classification (CPC):
**H04L 1/18; H04L 5/00; H04W 24/10; H04W 64/00;
H04W 72/04; H04W 72/12; H04W 72/23**

(86) International application number:
**PCT/KR2023/001400**

(87) International publication number:
**WO 2024/162492 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **LG Electronics Inc.**
**Yeongdeungpo-gu**
**Seoul 07336 (KR)**

(72) Inventors:
• **KIM, Hyunmin**
  **Seoul 06772 (KR)**
• **LEE, Dongsun**
  **Seoul 06772 (KR)**
• **KIM, Kijun**
  **Seoul 06772 (KR)**

(74) Representative: **Plasseraud IP**
**104 Rue de Richelieu**
**CS92104**
**75080 Paris Cedex 02 (FR)**

(54) **EFFICIENT DOWNLINK DATA SCHEDULING AND ACK/NACK WITHIN FREQUENCY-DEPENDENT MULTIPLE BEAMS**

(57)    A method and a device for efficient downlink data scheduling and acknowledgement (ACK)/non-acknowledgement (NACK) within frequency-dependent multiple beams are provided. In a situation in which multiple user equipments (UEs) are associated with multiple beams, respectively, a base station transmits a reference signal to the multiple UEs and receives a measurement report from the multiple UEs. The measurement report includes information on the location and/or movement of each of the multiple UEs. The base station determines a group including at least one UE on the basis of the measurement report received from the multiple UEs. In addition, the base station transmits second control information scheduling downlink data to the at least one UE belonging to the group, transmits the downlink data to the at least one UE, and receives hybrid automatic repeat request (HARQ) transmission for the downlink data from the at least one UE.

FIG. 9

```
┌──────────────────────────────────────┐
│  Perform an initial access to a cell  │─── S900
│     by performing a cell search       │
└──────────────────────────────────────┘
                   │
┌──────────────────────────────────────┐
│      Receive first control information │─── S910
│ that triggers a reference signal from the cell │
└──────────────────────────────────────┘
                   │
┌──────────────────────────────────────┐
│  Receive the reference signal from the cell │─── S920
└──────────────────────────────────────┘
                   │
┌──────────────────────────────────────┐
│         Perform a measurement          │─── S930
│      based on the reference signal     │
└──────────────────────────────────────┘
                   │
┌──────────────────────────────────────┐
│  Transmit a measurement report based on │─── S940
│  the measurement to the cell / the measurement │
│  report includes information related to a location │
│     and/or a movement of the UE        │
└──────────────────────────────────────┘
                   │
┌──────────────────────────────────────┐
│     Receive second control information │─── S950
│ for scheduling downlink data from the cell │
└──────────────────────────────────────┘
                   │
┌──────────────────────────────────────┐
│   Receive the downlink data from the cell │─── S960
└──────────────────────────────────────┘
                   │
┌──────────────────────────────────────┐
│        Perform HARQ transmission       │─── S970
│   for the downlink data to the cell    │
└──────────────────────────────────────┘
```

Description

## TECHNICAL FIELD

The present disclosure relates to efficient downlink data scheduling and Acknowledgement (ACK)/Non-acknowledgement (NACK) within frequency-dependent multiple beams.

## BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

With the commercialization of NR, which corresponds to the 5th Generation (5G) mobile communication technology, research on the 6th Generation (6G) mobile communication technology is beginning. It is expected that the 6G mobile communication technology will utilize a frequency band of 100 GHz or higher. Accordingly, the utilization frequency can be increased by more than 10 times compared to 5G, and the utilization potential of spatial resources is expected to increase further. This frequency band of 100 GHz or higher can be called sub-terahertz (sub-THz).

In the THz band that assumes a pencil beam, one User Equipment (UE) can be connected to each beam, and data can be transmitted and received in a Time Division Duplex (TDD) manner through a single carrier. Meanwhile, in a situation where low-end UEs transmitting and receiving low-capacity data and high-end UEs transmitting and receiving high-capacity data are coexisting, the Hybrid Automatic Repeat Request (HARQ) procedure is currently performed regardless of the capability of the UE. Transmission and reception of data and Acknowledgement /Negative Acknowledgement (ACK/NACK) through a pencil beam on a single carrier may result in longer delay times as the number of UEs increases.

## DISCLOSURE

### TECHNICAL SOLUTION

In an aspect, a method performed by a base station adapted to operate in a wireless communication system is provided. The method comprises, in a situation where a plurality of User Equipments (UEs) are associated with a plurality of beams respectively, transmitting a reference signal to the plurality of UEs, and receiving a measurement report from the plurality of UEs. The measurement report includes information related to a location and/or movement of each of the plurality of UEs. The method comprises, determining a group including at least one UE based on the measurement report received from the plurality of UEs. The method comprises, transmitting second control information for scheduling downlink data to the at least one UE belonging to the group, transmitting the downlink data to the at least one UE, and receiving a Hybrid Automatic Repeat Request (HARQ) transmission for the downlink data from the at least one UE.

In another aspect, an apparatus for implementing the above method is provided.

## BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of a wireless device to which implementations of the present disclosure are applied.
FIG. 4 shows an example of UE to which implementations of the present disclosure are applied.

FIG. 5 shows an example of reception beam gain when Fc=10GHz, the beam reception angle of the UE is 20 degrees, and the base station transmits a signal at a frequency of 9GHz to 11GHz at an angle of 0 to 40 degrees.

FIG. 6 shows another example of reception beam gain when Fc=10GHz, the beam reception angle of the UE is 20 degrees, and the base station transmits a signal at a frequency of 9GHz to 11GHz at an angle of 0 to 40 degrees.

FIG. 7 shows an example of a front-end antenna of a base station to which implementations of the present disclosure are applied.

FIG. 8 shows an example of the difference between multi-beam and single beam to which implementations of the present disclosure are applied.

FIG. 9 shows an example of a method performed by a UE to which implementations of the present disclosure are applied.

FIG. 10 shows an example of a method performed by a base station to which implementations of the present disclosure are applied.

FIG. 11 shows an example of a method for turning multi-beam operation on/off according to the implementation 1 of the present disclosure.

FIG. 12 shows an example of a method for performing HARQ transmission by grouping UEs according to the implementation 2 of the present disclosure.

FIG. 13 shows an example of a method for configuring a virtual UE according to the implementation 3 of the present disclosure.

FIG. 14 shows an example of a layer grouping method to which the implementation 4 of the present disclosure is applied.

FIG. 15 shows an example of ACK/NACK transmission according to DL data transmission and UE grouping to which implementations of the present disclosure are applied.

## MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

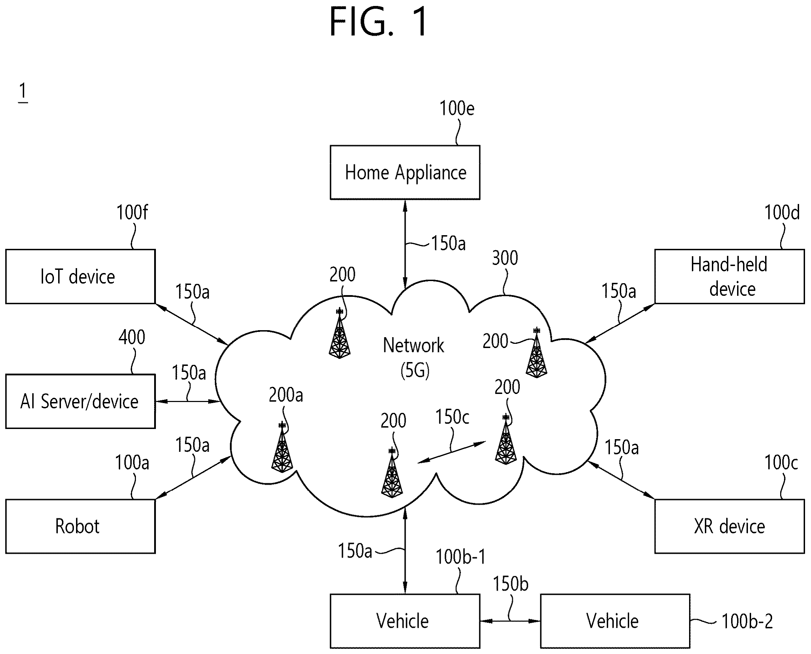

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a Closed-Circuit TV (CCTV), a recorder, or a black box.

The FinTech device may be, for example, a device capable of providing a financial service such as mobile payment. For example, the FinTech device may include a payment device or a Point of Sales (PoS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through Computer Graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

[Table 1]

| Frequency Range designation | Corresponding frequency range | Subcarrier Spacing |
| --- | --- | --- |
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

[Table 2]

| Frequency Range designation | Corresponding frequency range | Subcarrier Spacing |
| --- | --- | --- |
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

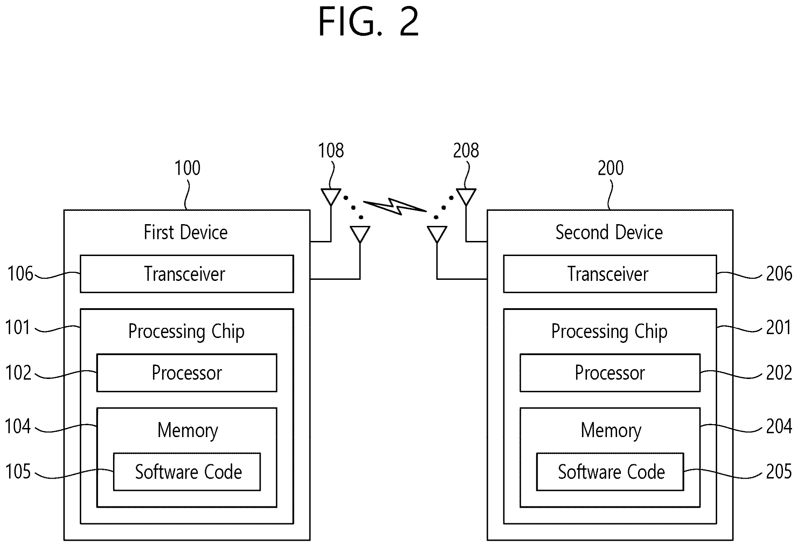

FIG. 2 shows an example of wireless devices to which implementations of the present disclosure are applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs) and/or one or more Service Data Units (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable ROMs (EEPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a Node B (NB), an eNode B (eNB), or a gNB.

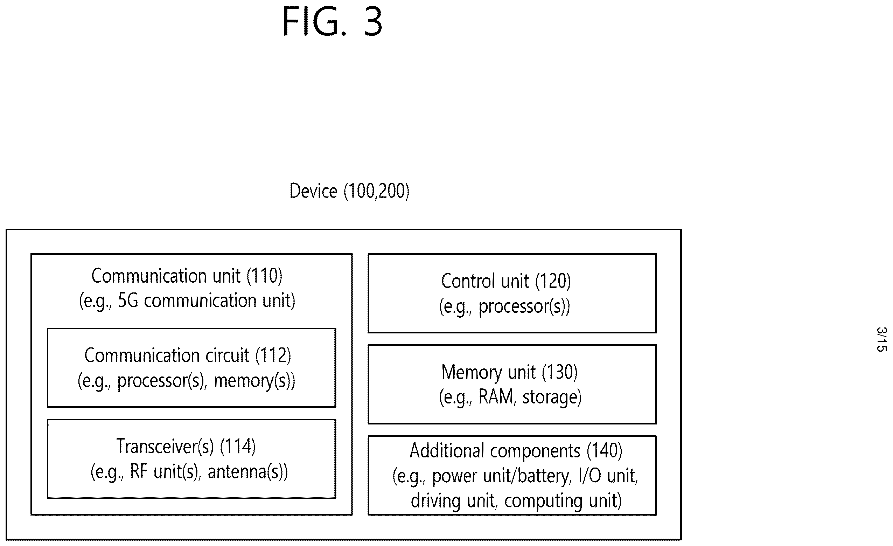

FIG. 3 shows an example of a wireless device to which implementations of the present disclosure are applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, Input/Output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an Application Processor (AP), an Electronic Control Unit (ECU), a Central Processing Unit (CPU), a Graphical Processing Unit (GPU), and a memory control processor. As another example, the memory unit 130 may be configured by a RAM, a Dynamic RAM (DRAM), a ROM, a flash memory, a volatile memory, a non-volatile memory, and/or a combination thereof.

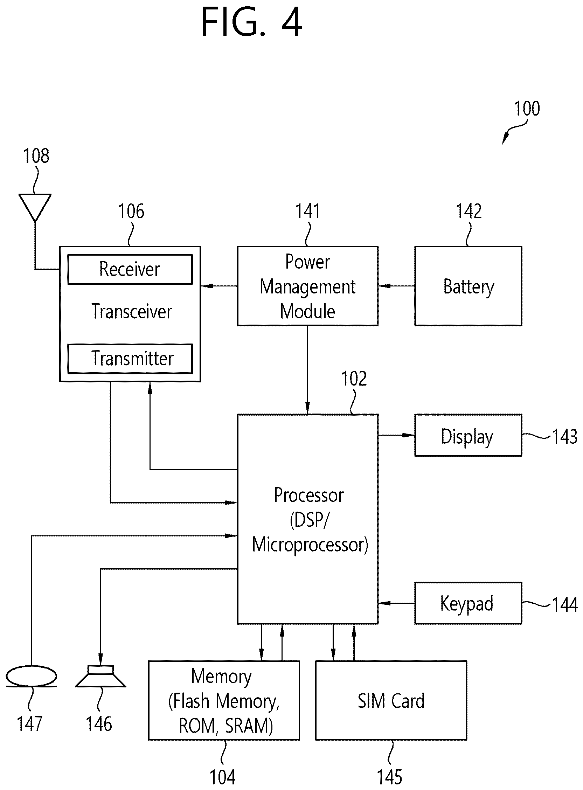

FIG. 4 shows an example of UE to which implementations of the present disclosure are applied.

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel® or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

THz wireless communication is a wireless communication using THz waves with a frequency of approximately 0.1 to 10 THz. That is, THz wireless communication is a wireless communication using a very high carrier frequency of 100 GHz or more. THz waves are located between the Radio Frequency (RF)/millimeter wave (mmWave) and infrared bands. THz waves penetrate non-metallic/non-polarizable materials better than visible light/infrared rays, and have a shorter wavelength than RF/millimeter waves, so they have high straightness and may be focused. Additionally, since the photon energy of THz waves is only a few meV, it has the characteristic of being harmless to the human body. The frequency band expected to be used for THz wireless communication may be the D-band (110 GHz to 170 GHz) or H-band (220 GHz to 325 GHz) bands where propagation loss due to molecular absorption in the air is small. THz wireless communication may be applied to wireless cognition, sensing, imaging, wireless communication, and THz navigation. Standardization discussions for THz wireless communications are underway in the 3GPP and IEEE 802.15 THz working group.

In THz wireless communications, there is a need to maximize beam gain due to severe path loss. Beams with low beam gain, such as conventional wide beams, may not be applicable to THz wireless communications. To maximize beam gain, a method of integrating a huge number of antennas into a small space may be considered. However, if this method is used, the number of micro-unit devices and/or RF chains connected to the devices increases, which may increase complexity and power consumption. In addition, beams with high beam gain used in THz wireless communication is so narrow that it is called a pencil beam, so it may be very difficult to control the beam.

When pencil beams are used in THz wireless communication, since the beam widths are very narrow, transmission and reception of data, transmission and reception of Acknowledgement (ACK)/Negative Acknowledgement (NACK) for the corresponding data, and/or transmission and reception of retransmission of data are likely to be performed 1:1 with the UE associated with each pencil beam. For example, a base station may transmit downlink data in the form of a single carrier using a pencil beam, a UE associated with the pencil beam may transmit ACK/NACK for the received data, and the base station may retransmit the downlink data.

Meanwhile, in a situation where low-end UEs transmitting and receiving low-capacity data and high-end UEs transmitting and receiving high-capacity data are coexisting, a Hybrid Automatic Repeat Request (HARQ) procedure is currently performed regardless of the capability of the UE. As described above, if the transmission and reception of data and/or ACK/NACK is performed 1:1 with the UE associated with the pencil beam through the pencil beam, a very long delay may occur if the channel environment is not good.

Therefore, the present disclosure proposes a method for performing retransmission based on multi-beam based layer grouping.

First, as a premise of multi-beam operation, beam squint in an ultra-wide bandwidth environment will be described.

In THz wireless communication, beam squint may occur even when operating a single beam in a UWB environment, so it is necessary to minimize beam squint by utilizing true time delay (TTD). In the present disclosure, operating a single beam may mean minimizing beam squint through a fixed $\Delta\tau$, and in the case of beam sweeping, changing $\Delta\tau$ according to the angle of beam sweeping or performing beam sweeping through a Phased Antenna Array (PAA).

Multi-beams may be formed in various shapes depending on $\Delta\tau$ and Fm. In the present disclosure, it is assumed that the base station has already fixed Fm and reflects the fixed $\Delta\tau$ according to the angle to be covered according to Fm. Therefore, Fm and $\Delta\tau$ do not change.

In wireless communications in environments with severe path loss, such as the THz band, a method of configuring a transceiver with a large number of antenna elements to maximize beam gain is being considered as a method to overcome the path loss. In addition, a method of extremely widening the band is being considered in order to transmit a large amount of data. However, the environment of a large number of antennas and UWB greatly narrows the beam width. Accordingly, the beam search process performed by the UE for beam alignment with the base station may become very complicated.

When aligned with a beam, the beam is aligned based on the center frequency, and the receiver can receive data through that beam. Since the bandwidth used in NR is a relatively narrow bandwidth ranging from 20 MHz to 100 MHz, there was no significant problem with beam alignment. However, since the bandwidth used in THz wireless communication is at least as wide as 1 GHz, the frequency offset becomes wide when the beam is aligned. In such an environment, it is difficult to satisfy frequency coherence, and the selective characteristic becomes strong. As the frequency band increases, this phenomenon can be more severe, and this can cause a problem in which the beam gain changes depending on the angle when considering the beam angle. This problem is called beam squint. Beam squint also occurs in narrow bands, but the degree is negligible. However, in wideband or ultra-wideband, the size of the beam gain loss can increase.

Equation 1 is an equation for calculating the beam gain according to the offset between the center frequency Fc set by the UE and the frequency position Fm of the signal transmitted by the base station.

【Equation 1】

$$G_a(\theta, \lambda) = \frac{\sin^2\left[N\pi d(\sin\theta/\lambda - \sin\theta_0/\lambda_0)\right]}{N^2 \sin^2\left[\pi d(\sin\theta/\lambda - \sin\theta_0/\lambda_0)\right]}$$

In Equation 1, $\theta_0$ is the reception angle of Fm, $\lambda_0$ is the wavelength of Fm. $\theta$ is the reception angle of Fc, and $\lambda$ is the wavelength of Fc. N is the number of antennas.

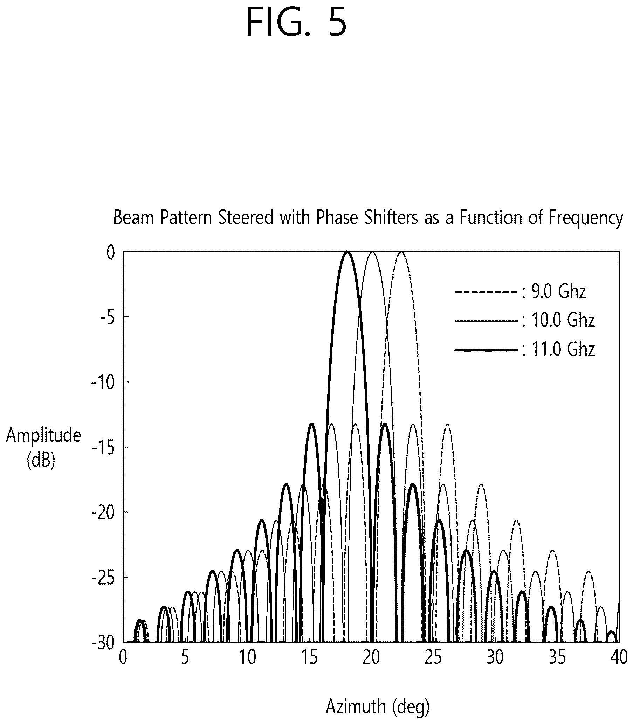

FIG. 5 shows an example of reception beam gain when Fc=10GHz, the beam reception angle of the UE is 20 degrees, and the base station transmits a signal at a frequency of 9GHz to 11GHz at an angle of 0 to 40 degrees.

Referring to FIG. 5, it can be confirmed that beam squint occurs in which the beam gain changes by angle depending on the transmission frequency.

To eliminate this beam squint, a method of controlling the phase by adjusting the signal transmission delay between antennas using TTD elements instead of phased array elements in analog beamforming can be considered.

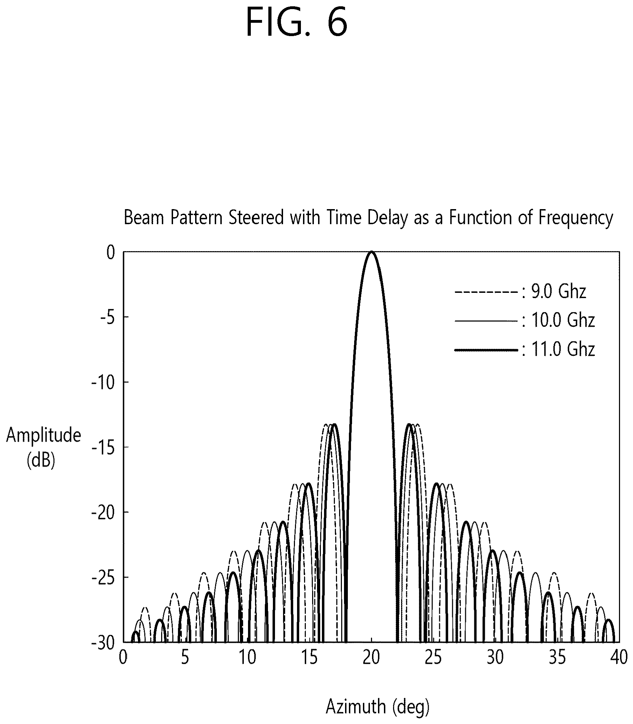

FIG. 6 shows another example of reception beam gain when Fc=10GHz, the beam reception angle of the UE is 20 degrees, and the base station transmits a signal at a frequency of 9GHz to 11GHz at an angle of 0 to 40 degrees.

Referring to FIG. 6, it can be confirmed that the beam squint is eliminated by adjusting the signal transmission delay and adjusting the wavelength of Fm to Fc by using TTD elements instead of phased array elements.

Such beam squint can be utilized to form multiple beams. TTD-based multi-beam is a technology that uses the characteristic that the beam angle changes according to the length of the time delay, and is a technique that forms a multi-beam with the maximum amplitude for different angles for each frequency by generating a difference in time delay between array antennas.

Equation 2 is an equation for calculating the beam gain (or array gain) for frequency Fm when a time delay is applied to a uniformly spaced linear array.

【Equation 2】

$$G(\theta, f_m) = \frac{1}{N_R}\left|\frac{\sin\left[\frac{N_R\pi}{2}\left(2f_m\Delta\tau + (f_m/f_c)\sin(\theta)\right)\right]}{\sin\left[\frac{\pi}{2}\left(2f_m\Delta\tau + (f_m/f_c)\sin(\theta)\right)\right]}\right|^2$$

In Equation 2, Fc is the center frequency, Fm is the frequency corresponding to the subcarrier index m. $\Delta\tau$ is the time delay difference between the array antenna elements. For example, based on the first array antenna element, the delay with the second array antenna element may be $\Delta\tau$, and the delay with the third array antenna element may be $\Delta\tau^*2$.

When forming multi-beams in this way, the shape of the multi-beams can also change as various conditions (e.g., number of subcarriers, number of antennas, time delay difference) change.

When using multi-beams from a communication perspective, if the number of beams is N, resources as much as Bandwidth Part (BWP) / N can be used for each beam. Additionally, since the frequency resources that can be used by a single beam are limited, the PAA technique can be used together for wideband data communications. For example, by using multi-panels, TTD with the same time delay applied to each panel can be used, and at the same time, multi-layers with different phase shifts can be formed.

Equation 3 represents the Antenna Weight Vector (AWV) applied to each array element n for the k-th layer (i.e., corresponding to the k-th panel) in the PAA.

【Equation 3】

$$[\mathbf{w}_{\text{PAA},k}]_n = \exp[j2\pi(n-1)k/K]$$

In Equation 3, K is the total number of layers. According to Equation 3, the beam rotates, and if this is expanded to multi-layer, resources can be used as much as the bandwidth*layer allocated to each beam in one beam.

Meanwhile, in the present disclosure, the front-end antenna of the base station needs to be configured to be able to turn on/off multi-beams and single beams. Various methods can be applied for this, but in the present disclosure, only analog beamforming is explained under the assumption that one RF chain is used.

From the Equation 2 described above, it can be seen that the size of the beam gain depends on the angle and frequency, and also that the spacing of the beams can be adjusted by $\Delta\tau$. Therefore, the beam gain can be appropriately adjusted using the frequency-dependent angle and $\Delta\tau$, and $\Delta\tau$ can be set to an arbitrary fixed value at the base station. In addition, TTD elements are currently being studied and/or have already been realized in the form of integrated waveguide meshes, such as the Butler matrix. However, the delay cannot increase linearly indefinitely in that method. Therefore, in the present disclosure, it is assumed that the center frequency Fc and the frequency offset are fixed.

Therefore, when the multi-beam is in On mode, since Fc, Fm, and $\Delta\tau$ are all fixed, the base station can always form the same type of multi-beams. In addition, in the single beam On mode (or multi-beam Off mode), since Fc and Fm are fixed, the base station can change the angle of the beam by changing $\Delta\tau$ according to the Angle of Arrival (AoA) between the UE. For example, assuming that three multi-beams are formed with angles of 30 degrees, 40 degrees, and 50 degrees respectively, the $\Delta\tau$ that allows the beams to be gathered in the 30 degree direction is different from the $\Delta\tau$ that allows the beams to be gathered in the 40 degree direction, so the base station should have at most three $\Delta\tau$s.

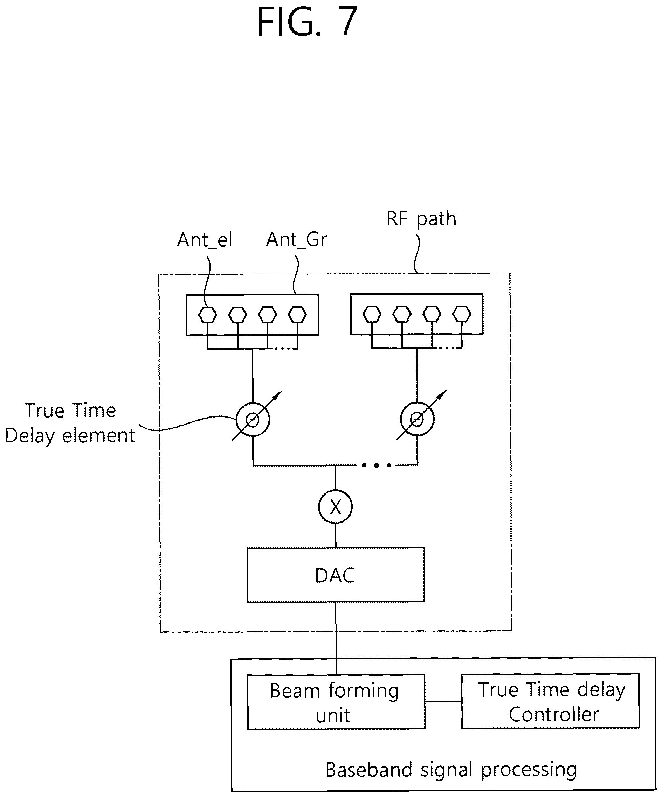

FIG. 7 shows an example of a front-end antenna of a base station to which implementations of the present disclosure are applied.

Referring to FIG. 7, a baseband signal processing unit of the front-end antenna of the base station processes a beam signal. The baseband signal processing unit includes a TTD control unit. The TTD control unit can control to linearly apply delay to each TTD element so as to form multiple beams and/or a single beam in the AoA direction of the UE to be transmitted.

The advantages and disadvantages of the above-mentioned communication using multi-beams depending on frequencies are as follows.

(1) Advantages

- Since multi-beams can be operated, beam sweeping is not required.
- Communication in UWB can be supported through programmable time delay.
- Hardware complexity is low and power consumption is low compared to PAA.
- Interference between beams does not need to be considered.

(2) Disadvantages

- Since the frequency and angle depend on each other, a single beam cannot use the entire UWB, and the bandwidth that each beam can use is limited to (total bandwidth)/(number of beams). In addition, due to interference between beams, it is necessary to empty adjacent frequency resources for each beam. Therefore, the frequency efficiency is lower than that of a single beam.

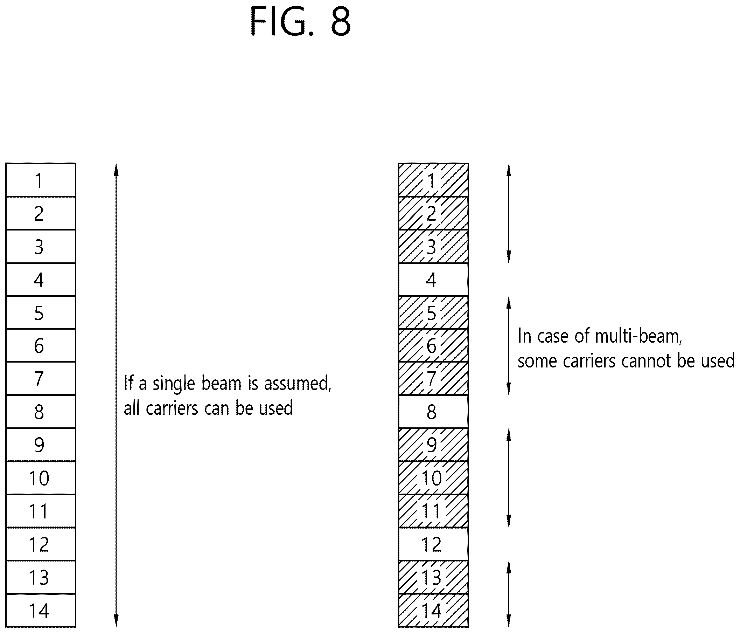

FIG. 8 shows an example of the difference between multi-beam and single beam to which implementations of the present disclosure are applied.

Referring to FIG. 8, a single beam can use all frequency resources (e.g., carriers) in UWB. On the other hand, multi-beam has a limitation on the frequency resources that each beam can use in UWB. For example, beam 1 can use carriers 1-3, beam 2 can use carriers 5-7, and beam 3 can use carriers 9-11. In addition, carriers 4, 7, and 12 cannot be used by any beams to prevent interference between beams.

- The resolution at which the delay can be adjusted depends on the chip. Therefore, the controllable phase may be limited.

Hereinafter, a method for performing retransmission based on multi-beam proposed in the present disclosure is described. According to implementations of the present disclosure, a base station can predict the distance of a UE and manage multiple UEs with similar channel quality (i.e., capable of setting the same Modulation and Coding Scheme (MCS)) by grouping them through Reference Signal Received Power (RSRP). More specifically, the base station can determine how many UEs can be covered via the multi-beam, and can use this to group at least one UE that can be covered via the multi-beam. The base station can schedule at least one UE belonging to the group to transmit ACK/NACK quickly, and can also schedule retransmission so that at least one UE belonging to the group can receive retransmission data quickly.

Hereinafter, the present disclosure assumes the following:

The bandwidth according to the beam direction is preset. For example, if the base station operates 8 multi-beams in a bandwidth of 1 GHz, the bandwidth allocated to each beam is 125 MHz. Therefore, the base station can preset Fm = 8, bandwidth = 125 MHz.

$\Delta\tau$ is fixed according to Fm. For example, when Fm = 8, $\Delta\tau$ will be a fixed value so that 8 beams can be formed at a uniform angle when the multi-beam is in On mode, and 8 $\Delta\tau$ can be set so that a single beam can be operated in 8 directions when the multi-beam is in Off mode.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

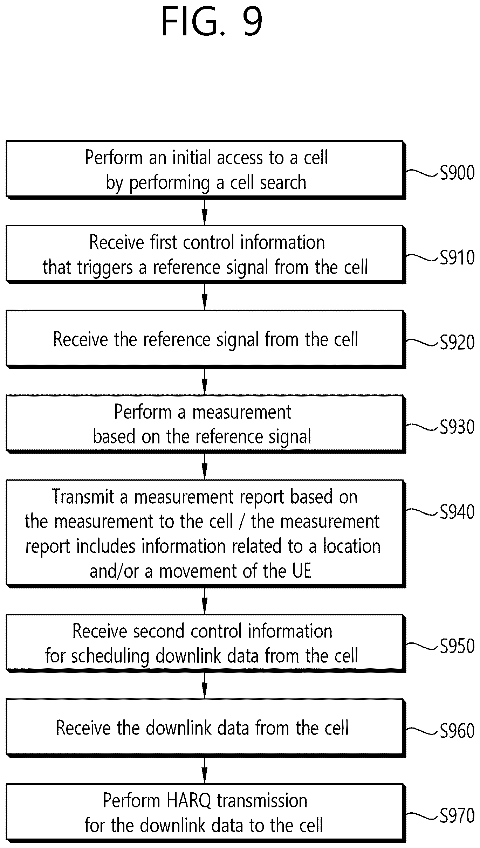

FIG. 9 shows an example of a method performed by a UE to which implementations of the present disclosure are applied.

In step S900, the method comprises performing an initial access to a cell by performing a cell search.

In step S910, the method comprises receiving first control information that triggers a reference signal from the cell.

In step S920, the method comprises receiving the reference signal from the cell.

In step S930, the method comprises performing a measurement based on the reference signal.

In step S940, the method comprises transmitting a measurement report based on the measurement to the cell. The measurement report includes information related to a location and/or a movement of the UE.

In step S950, the method comprises receiving second control information for scheduling downlink data from the cell.

In step S960, the method comprises receiving the downlink data from the cell.

In step S970, the method comprises performing HARQ transmission for the downlink data to the cell.

In some implementations, the UE may be associated with one beam among multiple beams.

In some implementations, a bandwidth corresponding to the one beam may be a part of a total bandwidth allocated based on a beam angle of the UE.

In some implementations, the reference signal may be an aperiodic Channel State Information Reference Signal (CSI-RS).

In some implementations, the reference signal may be triggered by a multi-beam reference signal trigger parameter in the first control information.

In some implementations, the information related to the movement may include at least one of a direction or a speed of the UE.

In some implementations, the UE may communicate with at least one of a mobile device, a network, and/or an autonomous vehicle other than the UE.

In addition, the method in perspective of the UE described above in FIG. 9 may be performed by the first wireless device 100 shown in FIG. 2, the wireless device 100 illustrated in FIG. 3, and/or the UE 100 shown in FIG. 4.

More specifically, the UE comprises at least one transceiver, at least one processor, and at least one memory operably connectable to the at least one processor and storing instructions. Operations performed based on the instructions being executed by the at least one processor are as follows.

The UE performs initial access to a cell by performing a cell search.

The UE receives first control information that triggers a reference signal from the cell via the at least one transceiver.

The UE receives the reference signal from the cell via the at least one transceiver.

The UE performs a measurement based on the reference signal via the at least one transceiver.

The UE transmits a measurement report based on the measurement to the cell via the at least one transceiver. The measurement report includes information related to a location and/or a movement of the UE.

The UE receives second control information for scheduling downlink data from the cell via the at least one transceiver.

The UE receives the downlink data from the cell via the at least one transceiver.

The UE performs HARQ transmission for the downlink data to the cell via at least one transceiver.

In some implementations, the UE may be associated with one beam among multiple beams.

In some implementations, a bandwidth corresponding to the one beam may be a part of a total bandwidth allocated based on a beam angle of the UE.

In some implementations, the reference signal may be an aperiodic CSI-RS.

In some implementations, the reference signal may be triggered by a multi-beam reference signal trigger parameter in the first control information.

In some implementations, the information about the movement may include at least one of a direction or a speed of the UE.

Furthermore, the method in perspective of the UE described above in FIG. 9 may be performed by control of the processor 102 included in the first wireless device 100 shown in FIG. 2, by control of the communication unit 110 and/or the control unit 120 included in the wireless device 100 shown in FIG. 3, and/or by control of the processor 102 included in the UE 100 shown in FIG. 4.

More specifically, a processing apparatus adapted to control a UE in a wireless communication system comprises at least one processor, and at least one memory operably connectable to the at least one processor and storing instructions. The at least one processor is configured to: obtain first control information that triggers a reference signal; obtain the reference signal; perform a measurement based on the reference signal; generate a measurement report based on the measurement, wherein the measurement report includes information related to a location and/or a movement of the UE; obtain second control information for scheduling downlink data; obtain the downlink data; and generate an ACK/NACK for the downlink data.

In addition, the method in perspective of the UE described in FIG. 9 may be performed by a software code 105 stored in the memory 104 included in the first wireless device 100 shown in FIG. 2.

The technical features of the present disclosure may be implemented directly in hardware, in a software executed by a processor, or in a combination of the two. For example, a method performed by a wireless device in a wireless communication may be implemented in hardware, software, firmware, or any combination thereof. For example, a software may reside in RAM, flash memory, ROM, EPROM, EEPROM, registers, hard disk, a removable disk, a CD-ROM, or any other storage medium.

Some example of storage medium may be coupled to the processor such that the processor can read information from the storage medium. Alternatively, the storage medium may be integral to the processor. The processor and the storage medium may reside in an ASIC. For other example, the processor and the storage medium may reside as discrete components.

The computer-readable medium may include a tangible and non-transitory computer-readable storage medium.

For example, non-transitory computer-readable media may include RAM such as Synchronous DRAM (SDRAM), ROM, Non-Volatile RAM (NVRAM), EEPROM, flash memory, magnetic or optical data storage media, or any other medium that can be used to store instructions or data structures. Non-transitory computer-readable media may also include combinations of the above.

In addition, the method described herein may be realized at least in part by a computer-readable communication medium that carries or communicates code in the form of instructions or data structures and that can be accessed, read, and/or executed by a computer.

According to some implementations of the present disclosure, a non-transitory computer-readable medium (CRM) has stored thereon a plurality of instructions.

More specifically, a non-transitory CRM stores instructions that, based on being executed by at least one processor, perform operations comprising: obtaining first control information that triggers a reference signal, obtaining the reference signal, performing a measurement based on the reference signal, generating a measurement report based on the measurement, wherein the measurement report includes information related to a location and/or a movement of the UE, obtaining second control information for scheduling downlink data, obtaining the downlink data, and generating an ACK/NACK for the downlink data.

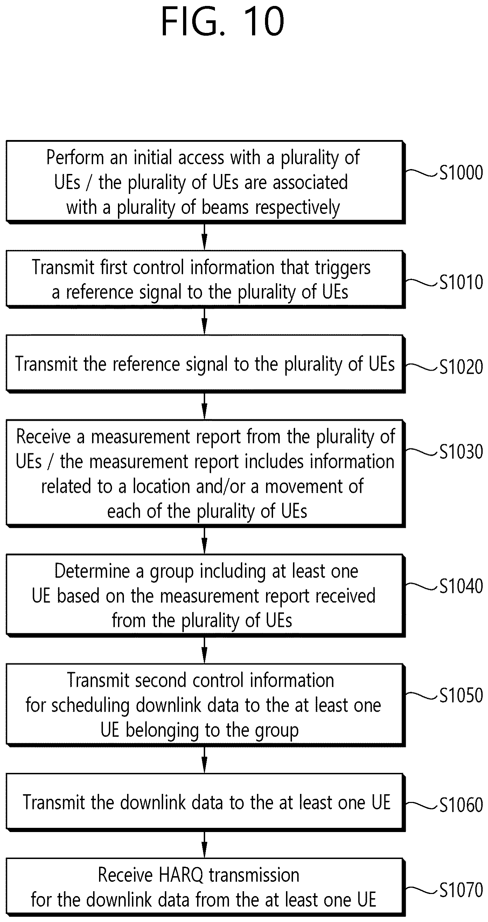

FIG. 10 shows an example of a method performed by a base station to which implementations of the present disclosure are applied.

In step S1000, the method comprises performing an initial access with a plurality of UEs. The plurality of UEs are associated with a plurality of beams respectively.

In step S1010, the method comprises transmitting first control information that triggers a reference signal to the plurality of UEs.

In step S1020, the method comprises transmitting the reference signal to the plurality of UEs.

In step S1030, the method comprises receiving a measurement report from the plurality of UEs. The measurement report includes information related to a location and/or a movement of each of the plurality of UEs.

In step S1040, the method comprises determining a group including at least one UE based on the measurement report received from the plurality of UEs.

In step S1050, the method comprises transmitting second control information for scheduling downlink data to the at least one UE belonging to the group.

In step S1060, the method comprises transmitting the downlink data to the at least one UE.

In step S1070, the method comprises receiving HARQ transmission for the downlink data from the at least one UE.

In some implementations, the method may further comprise determining whether the plurality of UEs can receive the multi-beam service. Determining whether the plurality of UEs can receive the multi-beam service may comprise determining whether the plurality of UEs are low-end UEs. Alternatively, determining whether the plurality of UEs can receive the multi-beam service may comprise determining whether the size of the downlink data is large enough to be provided by the multi-beam service.

In some implementations, the at least one UE belonging to the group may comprise some of the plurality of UEs.

In some implementations, the at least one UE belonging to the group may comprise a virtual UE that is not included in the plurality of UEs.

Additionally, the method in perspective of the base station described above in FIG. 10 may be performed by the second wireless device 200 shown in FIG. 2 and/or the wireless device 200 shown in FIG. 3.

More specifically, the base station comprises at least one transceiver, at least one processor, and at least one memory operably connectable to the at least one processor and storing instructions. Operations performed based on the instructions being executed by the at least one processor are as follows.

The base station performs initial access with a plurality of UEs. The plurality of UEs are associated with multiple beams respectively.

The base station transmits first control information that triggers a reference signal to the plurality of UEs via the at least one transceiver.

The base station transmits the reference signal to the plurality of UEs via the at least one transceiver.

The base station receives a measurement report from the plurality of UEs via the at least one transceiver. The measurement report includes information related to a location and/or a movement of each of the plurality of UEs.

The base station determines a group including at least one UE based on the measurement report received from the plurality of UEs.

The base station transmits second control information for scheduling downlink data to the at least one UE belonging to the group via the at least one transceiver.

The base station transmits the downlink data to the at least one UE via the at least one transceiver.

The base station receives HARQ transmission for the downlink data from the at least one UE via the at least one transceiver.

In some implementations, the base station may determine whether the plurality of UEs can receive the multi-beam service. Determining whether the plurality of UEs can receive the multi-beam service may comprise determining whether the plurality of UEs are low-end UEs. Alternatively, determining whether the plurality of UEs can receive the multi-beam service may comprise determining whether the size of the downlink data is large enough to be provided by the multi-beam service.

In some implementations, the at least one UE belonging to the group may include some of the plurality of UEs.

In some implementations, the at least one UE belonging to the group may include a virtual UE that is not included in the plurality of UEs.

Hereinafter, various embodiments of the present disclosure will be described.

1. Implementation 1: Method for turning multi-beam operation on/off

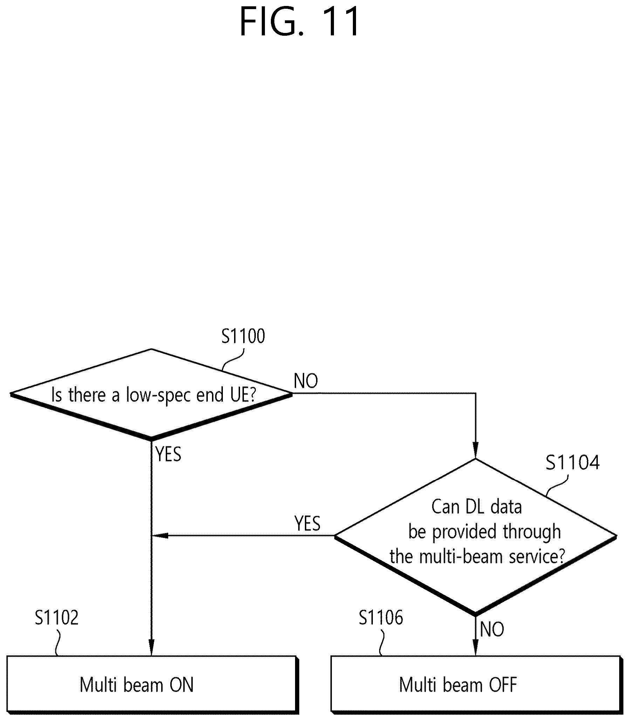

FIG. 11 shows an example of a method for turning multi-beam operation on/off according to the implementation 1 of the present disclosure.

In step S1100, the base station checks whether there is a low-end UE.

If there is a low-end UE, the base station turns on the multi-beam operation in step S1102 to provide a multi-beam service.

If there is no low-end UE, the base station can basically turn off the multi-beam operation. However, in step S1104, the base station can determine whether DL data can be provided to a specific number of UEs through the multi-beam service. For example, the base station can determine whether the size of DL data to be transmitted is a size of data that can be provided through the multi-beam service. If the DL data can be provided through the multi-beam service, the base station turns on the multi-beam operation according to step S1102. Otherwise, the base station turns off the multi-beam operation according to step S1106.

2. Implementation 2: Method for performing HARQ transmission by grouping UEs

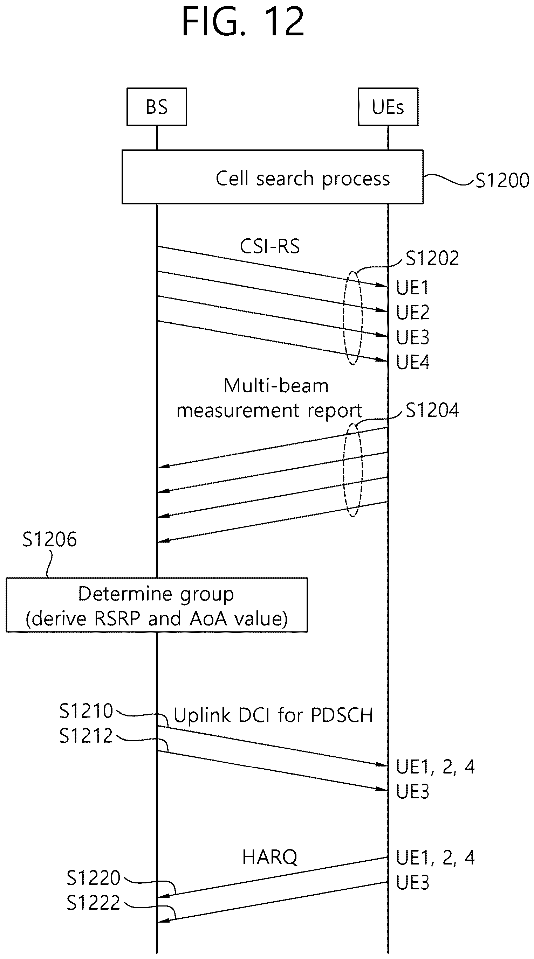

FIG. 12 shows an example of a method for performing HARQ transmission by grouping UEs according to the implementation 2 of the present disclosure.

In step S1200, the base station and multiple UEs are in a state where they can transmit and receive data, and the initial cell search procedure is completed.

First, according to the method for turning on/off the multi-beam operation according to the implementation 1 of the present disclosure described above, the base station can check whether the target UE to be transmitted can receive the multi-beam service in order to transmit DL data. In FIG. 12, it is assumed that UE1, UE2, UE3, and UE4 can receive the multi-beam service.

If the UE can receive the multi-beam service (i.e., the multi-beam operation is On), in step S1202, the base station triggers an aperiodic CSI to the corresponding UE and transmits the aperiodic CSI to the corresponding UE.

Aperiodic CSI can be triggered via UL DCI format (e.g., UL DCI format 0_1). For example, UL DCI format 0_1 can include a parameter for triggering multi-beam aperiodic CSI-RS. The parameter can represent a beam ID corresponding to a beam in bit units from 0 to a maximum number of multi-beams. A value of 0 for the parameter can indicate a case where multi-beams are not used.

Since the CSI-RS associated with multi-beams is to be measured by the UE in a narrow band, the base station can configure a resource list for multi-beams in the PDSCH-Config Information Element (IE) transmitted via an RRC message.

Table 3 shows an example of the PDSCH-Config IE according to the implementation 2 of the present disclosure. Table 3 assumes that the maximum number of beams that the base station can operate is 8, but this can be changed.

【Table 3】

```
PDSCH-Config ::= SEQUENCE {

..

MultiBeam_CSI_RS_Resource

..

}

MultiBeam_CSI_RS_Resource ::= SEQUENCE {

    MultiBeamfrequencyDomainAllocation ::= SEQUENCE {

        frequencyDomainAllocation CHOICE {
            MultiBeam Id (1~8)
            Freq_start (PRB start)
            Freq_end (PRB end)
            Measure length(PRB length)
            row1     BIT STRING (SIZE (4)),
            row2     BIT STRING (SIZE (12)),
            row4     BIT STRING (SIZE (3)),
            other    BIT STRING (SIZE (6))
        },
}

    nrofPorts                     ENUMERATED
{p1,p2,p4,p8,p12,p16,p24,p32},
    firstOFDMSymbolInTimeDomain    INTEGER (0..13),
    firstOFDMSymbolInTimeDomain2   INTEGER (2..12) OPTIONAL, -- Need R
    ...
}
```

Comparing the parameters (or fields) that configure MultiBeam_CSI_RS_Resource with the existing CSI-RS-ResourceMapping, since the channels are selective even within the bandwidth, CSI can be widely distributed in the high gain part of each beam and CSI can be densely arranged in the low gain part. Therefore, MultiBeam_CSI_RS_Resource and CSI-RS-ResourceMapping can be different except for frequencyDomainAllocation.

In step S1204, each UE that receives CSI-RS measures CSI-RS and reports the measurement result to the base station through a multi-beam measurement report.

In addition to the information previously reported (e.g., RSRP, Channel Quality Indicator (CQI)), the UE may additionally report its own movement information acquired through the Global Positioning System (GPS) or a device that can acquire information on the direction or speed of its movement. That is, the movement information may include direction information (e.g., east, west, south, north) and/or speed information of the UE.

For example, the UE may know the bandwidth information associated with its beam through an RRC configuration. For example, in UWB, the UE may recognize the beam ID associated with itself through the Identifier (ID) of the multi-beam, the start Resource Block (RB) of the bandwidth associated with its beam through the value of Freq_start, and the last RB of the bandwidth associated with its beam through Freq_end. In addition, since the power gain is different within the bandwidth, the RSRP and/or CQI can be measured in units of the measurement length. Through the measurement result, the UE may know whether the channel environment is low and/or whether it is located approximately in the outskirts within the beam coverage. If the UE determines that it is in the outskirts within the beam coverage, it can report its movement information to the base station by including it in the multi-beam measurement report.

In step S1206, the base station determines a group based on the multi-beam measurement report received from the UE. The base station may know the RSRP, CQI, movement information, AoA, etc., of each UE based on the multi-beam measurement report, and can utilize this in various ways for scheduling. This will be described below.

In step S1210, the base station transmits DCI and DL data scheduled by the corresponding DCI to UE1, UE2, and UE4 grouped in the group. In addition, in step S1212, the base station transmits another DCI and DL data scheduled by the corresponding DCI to UE3 not grouped in the group.

In step S1220, UE1, UE2, and UE4 grouped in the group perform HARQ transmission for the received DL data to the base station. In addition, in step S1222, UE3 not grouped in the group also performs HARQ transmission for the received DL data to the base station.

3. Implementation 3: Method for scheduling a UE by a base station based on a multi-beam measurement report

The base station may calculate an approximate Signal-to-Noise Ratio (SNR) through RSRP in the multi-beam measurement report reported by each UE. The base station may know in advance the amount of DL data to be transmitted to the UE, and may use the SNR to determine an MCS for transmitting the corresponding DL data. The SNR increases as the value of the power carried on the carrier increases. The base station may improve the power per RB according to the number of beams forming the multi-beam. For example, assuming that the multi-beam can be formed with 8 beams, power gain can occur because power from the remaining 6 unused beams can be collected and transmitted to the 2 beams that are used when only 2 beams are used.

Additionally, the base station may compensate the SNR in the following way through the movement information in the multi-beam measurement report reported by each UE.

1) If the base station can know that the UE is moving in the direction of the adjacent beam through the movement information reported by the UE, the base station can transmit DCI for scheduling the UE to the adjacent beam. If the speed of the UE is fast, the base station can transmit DCI for scheduling the UE to multiple beams, not just the adjacent beam. Since the frequency and beam angle depend on each other, the base station simply transmits DCI to a different carrier. The contents included in DCI may be different. However, the Transport Block Size (TBS) is set to the same.

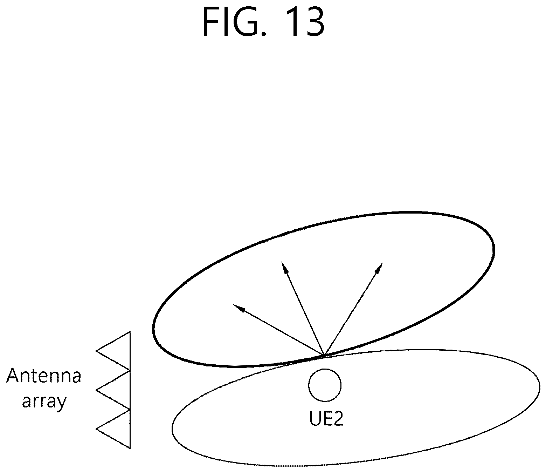

FIG. 13 shows an example of a method for configuring a virtual UE according to the implementation 3 of the present disclosure.

Referring to FIG. 13, if the base station can know that UE2 can move in the direction of an adjacent beam through the movement information reported by UE2, the base station can configure a virtual UE, such as UE2-2, that does not actually exist in the adjacent beam and include UE2-2 in the target of UE grouping.

Even if another UE actually exists in the adjacent beam, since the scrambling ID of the DCI is different, the other UE cannot decode the DCI, and only the UE that moves to the beam can decode the DCI.

2) In a Line-of-Sight (LoS) environment, if the distance from the base station is almost the same even when UE2 moves to the adjacent beam, the base station can use the same measured RSRP and/or CQI. Or, if the distance from the base station increases as UE2 moves to the adjacent beam, the base station can lower the SNR by the ratio of the increase in distance. Alternatively, if UE2 moves to an adjacent beam and the distance from the base station gets closer, the base station can increase the SNR by the ratio of the distance getting closer.

3) Assuming that the direction in which UE2 moves is within the Synchronization Signal Block (SSB) to which CSI belongs, a wide beam can be formed. The channel of the wide beam can use the value measured through CSI.

4. Implementation 4: Method for layer grouping for DL data transmission

Since the output power decreases according to the number of beams when forming multi-beams, the SNR decreases and the MCS index also decreases accordingly. The implementation 4 of the present disclosure discloses a method for performing layer grouping based on an MCS index determined through RSRP and/or CQI reported from a UE.

The base station can improve power per RB according to the number of beams forming the multi-beams. For example, assuming that the multi-beams can be formed with 8 beams, power gain can occur because power from the remaining 6 unused beams can be collected and transmitted to the 2 beams that use the power when only 2 beams are used. Therefore, layer grouping can be performed based on the MCS index and the number of multi-beams.

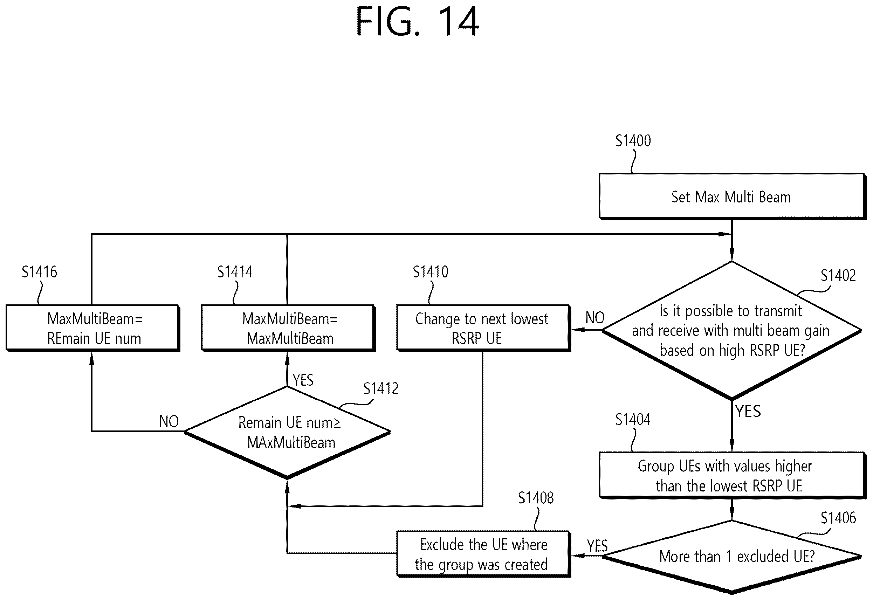

FIG. 14 shows an example of a layer grouping method to which the implementation 4 of the present disclosure is applied.

In step S1400, the base station sets the maximum number of multi-beams (MaxMultiBeam). Assuming that there are 4 UEs that need to transmit simultaneously in FIG. 14, the maximum number of beams that can be operated can be 4. In other words, the maximum number of beams that can be operated can be the same as the number of UEs that need to transmit simultaneously. Therefore, the base station sets MaxMultiBeam = 4. Alternatively, if the number of UEs that need to transmit simultaneously is greater than the maximum number of beams that can be operated, MaxMultiBeam can be set to the maximum number of beams that can be operated.

The base station can know the MCS index required for DL data to be transmitted to each UE.

The base station performs grouping based on the RSRP reported from each UE. In step S1402, the base station determines whether data transmission and reception are possible via the multi-beam service based on the UE with the lowest RSRP. Specifically, since MaxMultiBeam = 4 is set in FIG. 14, the base station infers the highest MCS that can be had when operating four beams based on the UE with the lowest RSRP. If the inferred MCS is smaller than the MCS index required for the UE, the UE is excluded and the UE with the next lowest RSRP becomes the reference (step S1410). If the inferred MCS is larger than the MCS index required for the UE (i.e., satisfied), the base station groups the UE and the UE with the higher RSRP into a group (step S1404).

If the number of UEs excluded in the grouping step is one or more (step S1406), the base station performs the next operation for the remaining UEs excluded from the group (step S1408). The base station determines whether the number of remaining UEs is greater than or equal to MaxMultiBeam (step S1412), and if the number of remaining UEs is less than MaxMultiBeam, sets MaxMultiBeam to the number of remaining UEs (step S1416). For example, if the number of remaining UEs is 2 in FIG. 14, the base station changes MaxMultiBeam to 2. If the number of remaining UEs is greater than or equal to MaxMultiBeam, MaxMultiBeam remains as is (step S1414).

Since the power per RB increases when operating two beams, a relatively high MCS index can be set even when the channel quality is low. The base station checks whether the MCS index can be satisfied for the remaining two UEs when the increased power per RB is applied. If the remaining two UEs can satisfy the MCS index, the base station groups the remaining two UEs into one group.

According to the implementation 3 of the present disclosure described above, when a virtual UE is set in an adjacent beam, the following two operations can be considered.

- The virtual UE can be excluded from the group. The base station can transmit to the virtual UE using TDD based on a wide single beam.
- The beams mapped to the virtual UE are physically different. Therefore, the channel quality can be different. For example, assuming that UE2 is in beam 3, the measurement report reported by UE2 is a measurement value for beam 3, and even if UE2 moves in the direction of beams 2 and 1, the base station cannot know the channel measurement values for beams 2 and 1. Therefore, if there is a value measured and reported by another UE previously for the set beam of the virtual UE, that value can be used, or if not, the measurement value for beam 3 can be used.

The DCI contents for each UE may not be the same.

According to the implementation 4 of the present disclosure, grouping may have advantages in terms of Peak-to-Average Power Ratio (PAPR).

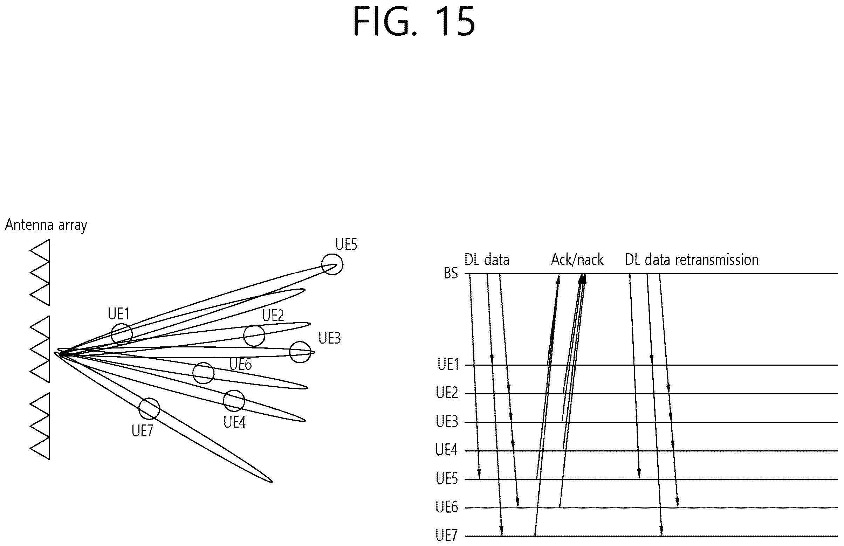

FIG. 15 shows an example of ACK/NACK transmission according to DL data transmission and UE grouping to which implementations of the present disclosure are applied.

Referring to FIG. 15, the transmission groups of DL data are divided into group 1 including UE5, group 2 including UE1/UE7, and group 3 including UE2/UE3/UE4/UE6. The base station transmits DL data for each group. On the other hand, the ACK/NACK transmission groups are divided into group 1 including UE1/UE5/UE7, and group 2 including UE2/UE3/UE4/UE6. That is, UE5 belongs to the same group 1 as UE1/UE7 and transmits ACK/NACK. This is because UE5 is located in the same beam direction as UE1.

The present disclosure may have various advantageous effects.

For example, the base station can group at least one UE that can be covered by the multi-beam into one group.

For example, the base station can schedule at least one UE belonging to the group to transmit ACK/NACK quickly.

For example, the base station can schedule retransmission so that at least one UE belonging to the group can receive the retransmission data quickly.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

Other implementations are within the scope of the following claims.

**Claims**

1. A method performed by a User Equipment (UE) adapted to operate in a wireless communication system, the method comprising:

    performing an initial access to a cell by performing a cell search;
    receiving first control information that triggers a reference signal from the cell;
    receiving the reference signal from the cell;
    performing a measurement based on the reference signal;
    transmitting a measurement report based on the measurement to the cell, wherein the measurement report includes information related to a location and/or a movement of the UE;
    receiving second control information for scheduling downlink data from the cell;
    receiving the downlink data from the cell; and
    performing Hybrid Automatic Repeat Request (HARQ) transmission for the downlink data to the cell.

2. The method of claim 1, wherein the UE is associated with one beam among multiple beams.

3. The method of claim 2, wherein a bandwidth corresponding to the one beam is a part of a total bandwidth allocated based on a beam angle of the UE.

4. The method of claim 1, wherein the reference signal is an aperiodic Channel State Information Reference Signal (CSI-RS).

5. The method of claim 1, wherein the reference signal is triggered by a multi-beam reference signal trigger parameter in the first control information.

6. The method of claim 1, wherein the information related to the movement includes at least one of a direction or a speed of the UE.

7. The method of claim 1, wherein the UE is in communication with at least one of a mobile device, a network, and/or autonomous vehicles other than the UE.

8. A User Equipment (UE) adapted to operate in a wireless communication system, the UE comprising:

    at least one transceiver;
    at least one processor; and
    at least one memory operably connectable to the at least one processor and storing instructions that, based on being executed by the at least one processor, perform operations comprising:

        performing an initial access to a cell by performing a cell search;
        receiving, via the at least one transceiver, first control information that triggers a reference signal from the cell;
        receiving, via the at least one transceiver, the reference signal from the cell;
        performing a measurement based on the reference signal;
        transmitting, via the at least one transceiver, a measurement report based on the measurement to the cell, wherein the measurement report includes information related to a location and/or a movement of the UE;
        receiving, via the at least one transceiver, second control information for scheduling downlink data from the cell;

receiving, via the at least one transceiver, the downlink data from the cell; and

performing, via the at least one transceiver, Hybrid Automatic Repeat Request (HARQ) transmission for the downlink data to the cell.

9. The UE of claim 8, wherein the UE is associated with one beam among multiple beams.

10. The UE of claim 9, wherein a bandwidth corresponding to the one beam is a part of a total bandwidth allocated based on a beam angle of the UE.

11. The UE of claim 8, wherein the reference signal is an aperiodic Channel State Information Reference Signal (CSI-RS).

12. The UE of claim 8, wherein the reference signal is triggered by a multi-beam reference signal trigger parameter in the first control information.

13. The UE of claim 8, wherein the information related to the movement includes at least one of a direction or a speed of the UE.

14. A processing apparatus adapted to control a User Equipment (UE) in a wireless communication system, the processing apparatus comprising:

at least one processor; and

at least one memory operably connectable to the at least one processor,

wherein the at least one processor is configured to perform operations comprising:

obtaining first control information that triggers a reference signal;

obtaining the reference signal;

performing a measurement based on the reference signal;

generating a measurement report based on the measurement, wherein the measurement report includes information related to a location and/or a movement of the UE;

obtaining second control information for scheduling downlink data;

obtaining the downlink data; and

generating an Acknowledgement (ACK)/Negative Acknowledgement (NACK) for the downlink data.

15. A non-transitory Computer Readable Medium (CRM) storing instructions, wherein the non-transitory CRM is configured to perform operations comprising:

obtaining first control information that triggers a reference signal;

obtaining the reference signal;

performing a measurement based on the reference signal;

generating a measurement report based on the measurement, wherein the measurement report includes information related to a location and/or a movement of the UE;

obtaining second control information for scheduling downlink data;

obtaining the downlink data; and

generating an Acknowledgement (ACK)/Negative Acknowledgement (NACK) for the downlink data.

16. A method performed by a base station adapted to operate in a wireless communication system, the method comprising:

performing an initial access with a plurality of UEs, wherein the plurality of UEs are associated with a plurality of beams respectively;

transmitting first control information that triggers a reference signal to the plurality of UEs;

transmitting the reference signal to the plurality of UEs;

receiving a measurement report from the plurality of UEs, wherein the measurement report includes information related to a location and/or a movement of each of the plurality of UEs;

determining a group including at least one UE based on the measurement report received from the plurality of UEs;

transmitting second control information for scheduling downlink data to the at least one UE belonging to the group;

transmitting the downlink data to the at least one UE;
receiving Hybrid Automatic Repeat Request (HARQ) transmission for the downlink data from the at least one UE.

17. The method of claim 16, further comprising determining whether the plurality of UEs can receive a multi-beam service.

18. The method of claim 17, wherein determining whether the plurality of UEs can receive the multi-beam service comprises determining whether the plurality of UEs are low-end UEs.

19. The method of claim 17, wherein determining whether the plurality of UEs can receive the multi-beam service comprises determining whether a size of the downlink data is large enough to be provided by the multi-beam service.

20. The method of claim 16, wherein the at least one UE belonging to the group comprises some of the plurality of UEs.

21. The method of claim 16, wherein the at least one UE belonging to the group comprises a virtual UE that is not included in the plurality of UEs.

22. A base station adapted to operate in a wireless communication system, the base station comprising:

at least one transceiver;
at least one processor; and
at least one memory operably connectable to the at least one processor and storing instructions that, based on being executed by the at least one processor, perform operations comprising:

performing an initial access with a plurality of UEs, wherein the plurality of UEs are associated with a plurality of beams respectively;
transmitting, via the at least one transceiver, first control information that triggers a reference signal to the plurality of UEs;
transmitting, via the at least one transceiver, the reference signal to the plurality of UEs;
receiving, via the at least one transceiver, a measurement report from the plurality of UEs, wherein the measurement report includes information related to a location and/or a movement of each of the plurality of UEs;
determining a group including at least one UE based on the measurement report received from the plurality of UEs;
transmitting, via the at least one transceiver, second control information for scheduling downlink data to the at least one UE belonging to the group;
transmitting, via the at least one transceiver, the downlink data to the at least one UE;
receiving, via the at least one transceiver, Hybrid Automatic Repeat Request (HARQ) transmission for the downlink data from the at least one UE.

# FIG. 1

EP 4 661 552 A1

# FIG. 2

EP 4 661 552 A1

# FIG. 3

Device (100,200)

| Communication unit (110) (e.g., 5G communication unit) | Control unit (120) (e.g., processor(s)) |
|---|---|
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

# FIG. 4

# FIG. 5

Beam Pattern Steered with Phase Shifters as a Function of Frequency

# FIG. 6

Beam Pattern Steered with Time Delay as a Function of Frequency

# FIG. 7

# FIG. 8

If a single beam is assumed, all carriers can be used

In case of multi-beam, some carriers cannot be used

# FIG. 9

Perform an initial access to a cell
by performing a cell search — S900

Receive first control information
that triggers a reference signal from the cell — S910

Receive the reference signal from the cell — S920

Perform a measurement
based on the reference signal — S930

Transmit a measurement report based on
the measurement to the cell / the measurement
report includes information related to a location
and/or a movement of the UE — S940

Receive second control information
for scheduling downlink data from the cell — S950

Receive the downlink data from the cell — S960

Perform HARQ transmission
for the downlink data to the cell — S970

# FIG. 10

Perform an initial access with a plurality of
UEs / the plurality of UEs are associated
with a plurality of beams respectively  ~S1000

Transmit first control information that triggers
a reference signal to the plurality of UEs  ~S1010

Transmit the reference signal to the plurality of UEs  ~S1020

Receive a measurement report from the plurality of
UEs / the measurement report includes information
related to a location and/or a movement of
each of the plurality of UEs  ~S1030

Determine a group including at least one
UE based on the measurement report received
from the plurality of UEs  ~S1040

Transmit second control information
for scheduling downlink data to the at least one
UE belonging to the group  ~S1050

Transmit the downlink data to the at least one UE  ~S1060

Receive HARQ transmission
for the downlink data from the at least one UE  ~S1070

# FIG. 11

S1100

Is there a low-spec end UE?　NO

YES

S1104

Can DL data
be provided through
the multi-beam service?

YES

NO

S1102

Multi beam ON

S1106

Multi beam OFF

# FIG. 12

# FIG. 13

Antenna array

UE2

# FIG. 14

# FIG. 15

## INTERNATIONAL SEARCH REPORT

| International application No. |
|---|
| **PCT/KR2023/001400** |

| A. | CLASSIFICATION OF SUBJECT MATTER |
|---|---|

**H04W 72/23**(2023.01)i; **H04W 72/04**(2009.01)i; **H04W 72/12**(2009.01)i; **H04W 24/10**(2009.01)i; **H04W 64/00**(2009.01)i; **H04L 1/18**(2006.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04W 72/23(2023.01); H04B 17/309(2015.01); H04B 7/08(2006.01); H04L 5/00(2006.01); H04W 24/10(2009.01); H04W 28/08(2009.01); H04W 4/06(2009.01); H04W 4/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 멀티빔(multi-beam), 기준신호(reference signal), 측정(measurement), 보고 (report), 그룹(group)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2019-0089499 A1 (QUALCOMM INCORPORATED) 21 March 2019 (2019-03-21) See paragraphs [0044], [0053], [0073]-[0098] and [0123]-[0128]; and claims 1-30. | 1-2,4,6-9,11, 13-16,20,22 |
| A | | 3,5,10,12,17-19,21 |
| Y | US 2022-0060243 A1 (NOKIA TECHNOLOGIES OY) 24 February 2022 (2022-02-24) See paragraphs [0051]-[0053]; and claims 1-17. | 1-2,4,6-9,11, 13-16,20,22 |
| A | US 2014-0003240 A1 (CHEN, Xiaogang et al.) 02 January 2014 (2014-01-02) See paragraphs [0049]-[0058] and [0064]-[0073]; and claims 1-30. | 1-22 |
| A | US 2022-0408298 A1 (SONY GROUP CORPORATION) 22 December 2022 (2022-12-22) See paragraphs [0119]-[0131]; and claims 1-14. | 1-22 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 October 2023** | **23 October 2023** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/001400** |

**C.    DOCUMENTS CONSIDERED TO BE RELEVANT**

| Category* | Citation of document, with indication, where appropriate, of the relevant passages | Relevant to claim No. |
| --- | --- | --- |
| A | MODERATOR (SAMSUNG). Moderator summary#2 for multi-beam enhancement: Round 1. R1-2103854, 3GPP TSG RAN WG1 Meeting #104b-e. 14 April 2021.<br>    See sections 3.2 and 3.3. | 1-22 |

Form PCT/ISA/210 (second sheet) (July 2022)

## INTERNATIONAL SEARCH REPORT
### Information on patent family members

| International application No. |
| --- |
| **PCT/KR2023/001400** |

| Patent document cited in search report | | | Publication date (day/month/year) | Patent family member(s) | | | Publication date (day/month/year) |
| --- | --- | --- | --- | --- | --- | --- | --- |
| US | 2019-0089499 | A1 | 21 March 2019 | CN | 111095819 | A | 01 May 2020 |
| | | | | EP | 3685521 | A1 | 29 July 2020 |
| | | | | TW | 201922027 | A | 01 June 2019 |
| | | | | US | 10651995 | B2 | 12 May 2020 |
| | | | | WO | 2019-060312 | A1 | 28 March 2019 |
| US | 2022-0060243 | A1 | 24 February 2022 | CN | 113767230 | A | 07 December 2021 |
| | | | | CN | 113767230 | B | 14 July 2023 |
| | | | | EP | 3963907 | A1 | 09 March 2022 |
| | | | | EP | 3963907 | A4 | 24 May 2023 |
| | | | | WO | 2020-220243 | A1 | 05 November 2020 |
| US | 2014-0003240 | A1 | 02 January 2014 | AU | 2013-323978 | A1 | 03 April 2014 |
| | | | | AU | 2013-323978 | B2 | 21 April 2016 |
| | | | | AU | 2013-334019 | A1 | 01 May 2014 |
| | | | | AU | 2013-334019 | B2 | 12 November 2015 |
| | | | | AU | 2016-203175 | B2 | 19 October 2017 |
| | | | | AU | 2016-203284 | A1 | 09 June 2016 |
| | | | | AU | 2016-203284 | B2 | 13 July 2017 |
| | | | | AU | 2016-203409 | A1 | 16 June 2016 |
| | | | | AU | 2016-203409 | B2 | 08 February 2018 |
| | | | | BE | 1020890 | A5 | 01 July 2014 |
| | | | | BE | 1021051 | B1 | 10 March 2015 |
| | | | | BE | 1023247 | B1 | 10 January 2017 |
| | | | | BR | 112015004107 | B1 | 24 May 2022 |
| | | | | BR | 112015004583 | A2 | 24 July 2018 |
| | | | | BR | 112015004583 | B1 | 24 May 2022 |
| | | | | BR | 112015004584 | A2 | 04 July 2017 |
| | | | | BR | 112015004584 | B1 | 01 November 2022 |
| | | | | BR | 112015004586 | A2 | 04 July 2017 |
| | | | | BR | 112015004586 | B1 | 30 August 2022 |
| | | | | CA | 2863618 | C | 23 June 2020 |
| | | | | CA | 2874902 | C | 26 October 2021 |
| | | | | CA | 2878195 | C | 28 July 2020 |
| | | | | CA | 2880588 | C | 10 March 2020 |
| | | | | CA | 2926378 | C | 16 March 2021 |
| | | | | CA | 2931664 | C | 18 August 2020 |
| | | | | CA | 2957198 | C | 07 May 2019 |
| | | | | CA | 2986418 | A1 | 01 August 2013 |
| | | | | CN | 103428659 | A | 04 December 2013 |
| | | | | CN | 103517327 | B | 11 August 2017 |
| | | | | CN | 103532680 | A | 22 January 2014 |
| | | | | CN | 103532680 | B | 15 September 2017 |
| | | | | CN | 103581880 | A | 12 February 2014 |
| | | | | CN | 103763694 | A | 30 April 2014 |
| | | | | CN | 103763694 | B | 29 August 2017 |
| | | | | EP | 2868001 | A1 | 06 May 2015 |
| | | | | EP | 2868001 | A4 | 16 March 2016 |
| | | | | EP | 2868001 | B1 | 26 February 2020 |
| | | | | KR | 10-1653257 | B1 | 02 September 2016 |
| | | | | KR | 10-1990673 | B1 | 18 June 2019 |
| | | | | KR | 10-2015-0013677 | A | 05 February 2015 |

Form PCT/ISA/210 (patent family annex) (July 2022)

## INTERNATIONAL SEARCH REPORT
### Information on patent family members

International application No.

**PCT/KR2023/001400**

| Patent document cited in search report | | | Publication date (day/month/year) | Patent family member(s) | | | Publication date (day/month/year) |
|---|---|---|---|---|---|---|---|
| | | | | KR | 10-2016-0013250 | A | 03 February 2016 |
| | | | | US | 9225478 | B2 | 29 December 2015 |
| | | | | WO | 2014-008072 | A1 | 09 January 2014 |
| US | 2022-0408298 | A1 | 22 December 2022 | CN | 109429261 | A | 05 March 2019 |
| | | | | CN | 110603839 | A | 20 December 2019 |
| | | | | CN | 110603839 | B | 09 June 2023 |
| | | | | CN | 116506041 | A | 28 July 2023 |
| | | | | CN | 116506042 | A | 28 July 2023 |
| | | | | EP | 3678406 | A1 | 08 July 2020 |
| | | | | EP | 3678406 | B1 | 27 October 2021 |
| | | | | US | 11477677 | B2 | 18 October 2022 |
| | | | | US | 2020-0162956 | A1 | 21 May 2020 |
| | | | | WO | 2019-042223 | A1 | 07 March 2019 |

Form PCT/ISA/210 (patent family annex) (July 2022)